# EUROPEAN PATENT APPLICATION

(11) **EP 1 630 112 A1**
(43) Date of publication of application: **01.03.2006**
(21) Application number: 04425650.1
(22) Date of filing: 31.08.2004
(51) Int. Cl.: B65G 47/82, C03B 9/453

(54) **A pusher system for hollow glassware forming machine**

(71) Applicant: BDF HOLDING S.p.A., 36100 Vicenza (IT)
(72) Inventor: Sasso, Daniele, 36100 Vicenza (IT); Borsati, Damiano, 37041 Albaredo d'Adige (Verona) (IT)
(74) Representative: Notaro, Giancarlo

(57) **Abstract**

A system of the pusher type, for hollow glassware forming "I.S." machine includes a plurality of pusher devices for transferring one or multiple articles (P) from a first position, on a side of a moving conveyor (1) to a second position on said conveyor (1), by means of an angular movement driven by a first electric motor (9). Each pusher device includes a gripping head (3) movable mounted with a reciprocating motion upon the rotatable structure (6) which performs the above-mentioned transfer angular movement. The reciprocating linear movement of the gripping head (3) is driven by a second electric motor (26) which is stationary mounted on a fixed support structure and which drives the gripping head (3) through a mechanical transmission, which converts the rotating movement of the output shaft of the second electric motor (26) in a linear movement of the gripping head (3), relative to the above-mentioned rotatable structure (6).

## Description

The present invention relates to the so-called "pusher" systems for hollow glassware forming I.S. machines, of the type including a plurality of pusher devices, each capable of transferring one or more article from a first position, on one side of a moving conveyor, to a second position, on said conveyor, by an angular movement driven by an electric motor.

The invention particularly relates to a system of the type above stated, wherein each of said pusher devices includes:
a first fixed structure,
a second structure rotatably mounted upon said first fixed structure and which can be rotated by said electric motor for carrying out the angular transfer movement of the articles, and
a reciprocating gripping head movably mounted upon said second rotatable structure and driven by a second electric motor through a respective mechanical transmission, which transforms the rotation of the respective engine to linear motion of the gripping head, in order to obtain the in and out engagement of said head upon and from the articles to be transferred, at the beginning and at the end of the transfer angular movement.

A system having all the above stated features is known, for example, by the EP 0 498 635 B1 document.

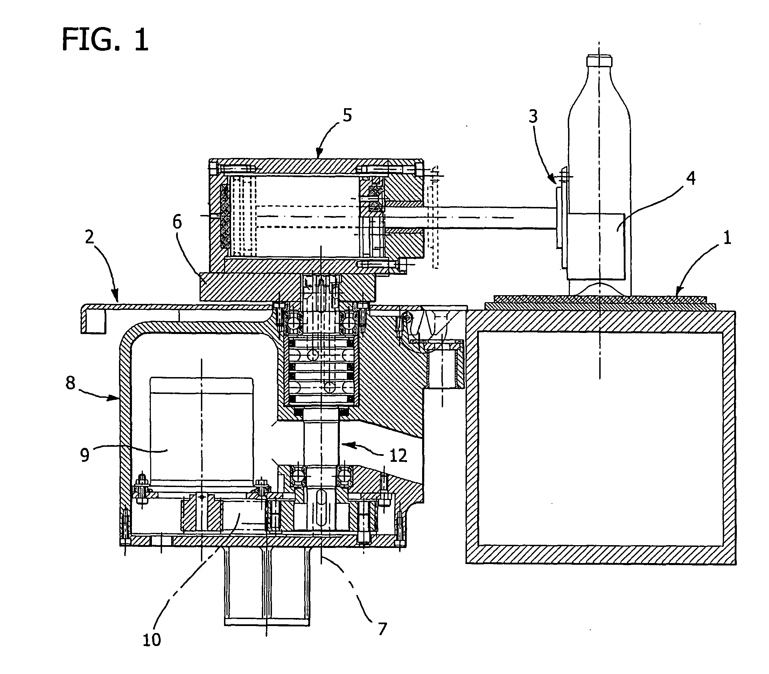

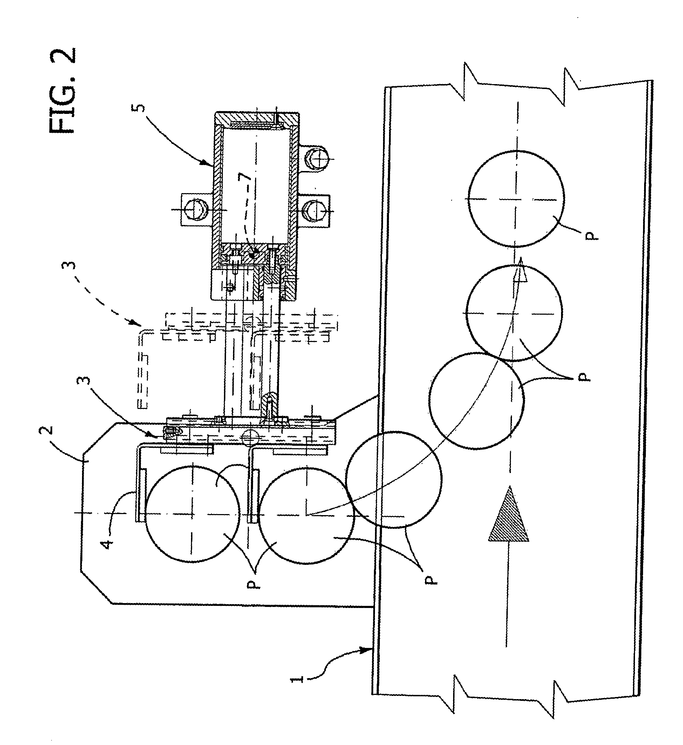

The known systems of the above stated type are used in the hollow glassware forming "I.S." machines for transferring the end products, which at the exit from the finishing mold are positioned on a cooling plate (or "dead plate") on a conveyor belt placed in front of the machine. In the more conventional systems, the gripping head is linearly driven with reciprocating motion by means of a pneumatic cylinder. This latter is rotated by an angle of about 90° around an axis perpendicular to the cylinder axis by an electric motor. Once an article is placed upon the cooling plate, the pneumatic cylinder drives the outlet of the gripping head for its engagement on the articles. At this point the electric motor is driven which, by means of a rotation at about 90°, carries the articles on the moving carpet of a conveyor belt, where they are released by a moving back drive of the gripping head. The conventional arrangement above described is shown in the figures 1, 2 of the enclosed drawings, which show an elevation view and a plan view of the system. Numeral 1 shows the conveyor belt, which receives the P articles coming from the waiting position above the cooling plate 2. Numeral 3 generally shows the gripping head, equipped with gripping fingers 4, which is driven by a pneumatic cylinder 5 supported by a holding structure 6 which is rotatably mounted around an axis 7 above a fixed holding structure 8. The transfer angular movement of the P articles, from the waiting position above the plate 2 to the end position on the conveyor belt 1, is imparted to the rotatable structure 6 by an electric motor 9 arranged in the fixed structure 8, by means of a timing belt transmission 11 and a shaft 12.

The above described conventional system, using a pneumatic cylinder for driving the linear motion of the gripping head, has a series of drawbacks.

First of all, there is a poor repeatability in the exit/return movement of the gripping fingers of the articles, since the drive is due to an outer drive solenoid valve, while the speed control is assigned to a flow control valve. It is consequently very difficult, if not impossible, to adjust all the sections of the "I.S." machine, with the same exit and return times of the gripping fingers.

Moreover, when the physical parameters of the compressed air (pressure, moisture, temperature) and the resistant frictions vary, operation changes may occur in time. In other words, the use of a pneumatic cylinder does not allow to obtain accuracy and repeatability in the movements.

Further, in the case of a fast conveyor belt, problems may occur in delivering the articles to the conveyor in a perfectly aligned position, as a consequence of the centrifugal force induced on the articles by the rotation of the pneumatic cylinder, whose speed is pre-arranged as a function of the belt speed. The centrifugal force tends to remove the articles from the gripping head. On the other hand, the Vₙ speed of the conveyor belt is a fixed parameter bound to the production and the rotation speed of the cylinder is established so as to obtain a peripheral speed of the articles during the transfer movement substantially corresponding to the belt speed. Therefore, the centrifugal force imparted to the articles during the rotation of the cylinder is equal to F_{c} = (M x Vₙ²) /R, wherein M is the article mass and R is the radius of the traveled path. It follows that for reducing the centrifugal force, we must increase the rotation radius, with the same tangential peripheral speed. Such a result is not however feasible with a rotating pneumatic cylinder.

Still an additional drawback of the conventional systems lies in that, when the diameter of the articles produced by the machine changes, it is required to manually adjust the pusher mechanism in order to alter either the stroke of the gripping fingers or the cylinder position, in order to always ensuring that, when the gripping head is in the maximum feed position, the gripping fingers are almost contacting with the article side. These adjustments cause considerable wastes of time on the occasion of production changes.

As it has been stated early in the present invention, a pusher system having the features stated in the pre-characterizing part of the appended claim 1, is known from EP 0 498 635 B1. In such a known solution, the pneumatic cylinder is replaced by an electric motor which drives the linear motion of the gripping head by means of a rack and pinion system. The electric motor driving the linear motion of the gripping head is mounted on the rotatable structure and therefore rotates with such a structure during the transfer angular movement of the articles. This leads to some disadvantages due to the considerable moving mass during the transfer rotation, and involves as well a greater difficulty with reference to the need of supplying electric energy to the engine which is mounted on the rotatable structure.

The object of the present invention is to carry out a pusher system of the type shown in the pre-characterizing part of the appended claim 1, which lacks in the above described drawbacks.

In view of attaining this object, the invention aims at a system of the above defined type and further characterized in that the above-mentioned electric motor, which drives the linear motion of the gripping head of each pusher device, is stationary mounted on the above fixed structure.

By virtue of this feature, the system according to the invention on the one hand overcomes all the drawbacks proper to the conventional solutions using a pneumatic cylinder for driving the linear motion of the gripping head, and on the other hand also overcomes the drawbacks of the device known by EP 0 498 635 B1, wherein the electric motor driving the linear motion of the gripping head rotates along with the rotatable structure during the transfer angular movement of the articles.

In the preferred embodiment of the invention, the mechanical transmission transforming the rotation of said second electric motor in linear motion from of gripping head, includes a first shaft rotated by said second electric motor and arranged with its axis coincidental with the axis of rotation of the rotatable structure. Preferably, the above mentioned mechanical transmission further includes a pair of gears in engagement with each other and mounted on said first shaft and on a second shaft orthogonal to the first shaft, respectively, which drives the linear movement of the gripping head through a screw-internal thread device. The two above-mentioned gears are preferably two conical gears forming a conical couple.

The above described arrangement shows, from one hand, the advantage of allowing the drive of the linear movement of the gripping head through an electric motor which is fixedly mounted on the fixed structure and, from the other hand, it is of a simple and reliable structure.

With the preferred embodiment above described, when a rotation movement of the rotatable structure is driven by maintaining steady the actuating transmission of the gripping head, a "rolling" of the conical gear, mounted on the aforesaid second shaft upon the conical gear mounted on the first shaft, occurs, which causes however a linear displacement of the gripping head. For this reason, according to a further feature of the invention, the second electric motor which drives the linear movement of the gripping head is equipped with an electronic control system, which is able to compensate the displacement of the gripping head induced by the rotation of the rotatable structure. The second electric motor is therefore working even during the transfer angular movement driven by the first electric motor.

As it can be seen, therefore, in the system according to the invention there are no more pneumatic components and both the transfer angular movement and the linear movement of in/out engagement of the gripping head are controlled by means of respective electric motors. The two engines are simultaneously controlled so as to adjust, during the rotation, the position of the gripping head. This also allows to carry out small changes of the rotation axis from the starting, upon the cooling plate, until the arrival of the articles on the carpet of the conveyor belt, so that to compensate any errors of articles alignment upon the conveyor, particularly in machines with a high number of mold cavities (the so-called "triple drop" and "quadruple drop" I.S. machines). The use of the electric control on the positioning drive motor of the gripping head introduces an unquestionable advantage with respect to the pneumatic control concerning repeatability, precision and speed control of the fingers. This requirement is particularly sensed in the control of "I.S." machines with a great number of sections (18-20-24 sections), wherein a single conveyor belt collects all the bottles produced by the machine (720-760 bottles per minute). In this kind of machines, the accuracy and the repeatability of the reentry movement of the gripping head of the articles are very important, since the pusher mechanism must deliver the produced articles from the section upon a belt which travels at about 60-65 m/min and must insert these articles between other articles already existing on the belt (both incoming and already passed over) with a space between article and article which can even be only 20-30 mm.

In the conventional pusher mechanism, the pneumatic cylinder which drives the linear movement of the gripping head is controlled by one or two solenoid valves and the speed control of exit and reentry of the head is executed by a pneumatic flow rate regulator. It can be easily understood how the adjustment of 10-20-24 mechanisms existing in a machine and synchronized with each other is in this way completely empiric and highly complicated to carry out. Indeed, it is impossible to obtain exactly the same adjustment for all the mechanisms of a machine. With the system according to the invention, the following benefits are therefore attained:
- absolute repeatability in the movements of exit/reentry of the gripping head among all the pusher mechanisms of a machine, with a consequent advantage in the loading of the conveyor belt of fast and "tandem" machines;
- increasing speed of reentry of the gripping head and possibility of adjusting the motion profile, with a consequent advantage concerning a better and more exact release of the articles upon the carpet of the conveyor belt;
- improved flexibility of the mechanism, as there is the possibility of adjusting the position of the gripping head also during the transfer angular movement, with a consequent possibility in particular of correcting the alignment errors of the articles on the conveyor;
- electric, instead of mechanical, control of the gripping position of the articles from the gripping head, since the starting and arrival positions of the gripping head are programmable (in the case of the cylinder it was necessary to move the cylinder);
- decrease of the moving masses during the transfer angular movement and greater easiness of wiring, by virtue of the predisposition of the drive electric motor of the gripping head upon the fixed structure of the mechanism.

Further features and advantages of the invention will result from the following description with reference to the enclosed drawings, which are given as not limitative example, wherein:
- figures 1, 2 are a sectional view in a vertical plane and e plan view, partly cut-off, respectively, of a conventional system, already above described,
- figure 3 is sectional view of a vertical plane of a preferred embodiment of a pusher device according to the invention,
- figure 4 is a partly sectional view of a detail of the device in figure 3,
- figure 5 is an additional sectional view only of the part of the device which performs the transfer angular movement,
- figure 6 is a plan view of the assembly shown in figure 5,
- figure 7 is a sectional view according to the line VII-VII of figure 5, and
- figure 8 is a plan view of the device of figure 3.

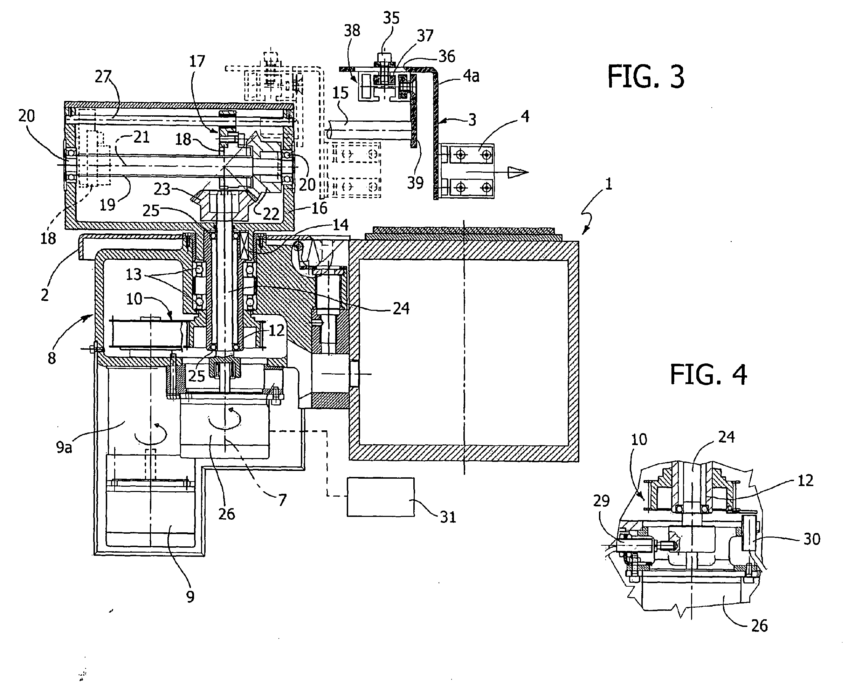

In the figures 3-8 the parts corresponding to those shown in figures 1, 2 are indicated with the same reference numeral. Also in the case of the embodiment according to the invention, the pusher device includes a fixed support structure 8 on which a structure 6 is rotatable mounted around a vertical axis 7, for carrying out the transfer angular movement of the articles from a cooling plate 2 to a moving conveyor belt 1. In this case too, the rotatable structure 6 is driven by an electric motor 9 through a belt drive 10. In the case shown in figure 3, between the electric motor 9 and the belt drive 10 a reduction gear assembly 9a of any known type is interposed. The belt drive 10 rotates a hollow shaft 12, which axis corresponds with the axis of rotation 7 of the structure 6. The shaft 12 is rotatably supported by the fixed structure 8 through roller bearings 13. It is stiffly connected to said structure and secured in a rotation manner therewith by interposition of a key 14.

In the case of the invention too, the gripping head 3, with the respective gripping fingers 4, is mounted on the rotatable structure 6 so as to linearly move in a reciprocating motion. With reference to the shown embodiment, the linear motion of the gripping head 3 is driven by two stems 15 with a circular section (see figures 3 and 5-7) each one having one end stiffly connected to the structure of the gripping head 3 and slidably extending in parallel with each other by means of respective openings (non visible in the drawings) obtained in an end wall 16 of a hollow body forming the rotatable structure 6. The ends of the stems 15 located from the opposite part to the gripping head 3 are secured to an element 17 which is movable mounted linearly inside the hollow body of the rotatable structure 6. The movable element 17 includes an internally threaded bushing, or internal thread, 18 which is engaged upon a screw 19 preferably of the type with ball screw or satellite rollers. The screw 19 is rotatable mounted inside the hollow body of the structure 6, through bearings 20, along an axis 21 orthogonal to the axis 7 and defining the direction of the linear motion of the gripping head 3.

Always referring to the shown example, on the shaft formed by the screw 19 a conical gear 22 is drive fitted. The conical gear 22 engages with a second conical gear 23 which is in turn drive fitted on a shaft 24, which axis corresponds to the vertical axis 7 and extends inside the hollow structure of the shaft 12. The shaft 24 is rotatably supported inside the shaft 12 by means of bearings 25.

The lower end of the shaft 24 is driven by an electric motor 26 fixedly mounted on the fixed support structure 8.

Still with reference to the structure supporting the gripping head 3, the axial movement of the stems 15 bearing the gripping head 3 is ensured by a guide rod 28 extending inside the cavity of the structure 6 with its opposite ends secured to opposite end walls of said structure 6 and which slidably engages a through hole 28 of the movable element 17. The guide rod 27 also functions for preventing the rotation of the bushing or internal thread 18, so as a rotation of the screw 19 changes in a linear motion of the movable element 17.

For the position control, both with reference to the rotation movement driven by the first electric motor 9 and with reference to the linear movement of the gripping head 3 driven by the second electric motor 26, proximity sensors 29, 30 (figure 4) are used, placed so as to sense the position of the shaft 24 and of the shaft 12, respectively.

In the operation, P articles are transferred from the cooling plate 2 to the conveyor belt 1 by means of an angular movement of the structure 6 around the axis of rotation 7, which is driven by the first electric motor 9. Independently of the angular movement of the structure 6 around the axis 7, the second electric motor 26 drives the reciprocating linear motion of the gripping head 3, which allows the engagement of the head 3 on the P products before the beginning of the transfer angular movement and the release of the head 3 from the P products once such products have been transferred upon the conveyor belt 1.

The angular movement of the structure 6 around the axis 7 is driven by the engine 9 through the transmission 10 and the hollow shaft 12 rotatably connected with the body of the rotatable structure 6. The linear movement of the gripping head 3 is driven by the electric motor 26, which is also arranged in a stationary position on the fixed support structure 8, by means of the shaft 24 extending inside the hollow shaft 12, the conical pair 23, 22 and the screw 19. The rotation of the screw 19 causes a linear movement of the bushing 18, which cannot rotate because of the guide rod 27. The linear movement of the bushing 17 is transmitted by the element 17 and the stems 15 to the structure of the gripping head 3.

In the case of the shown embodiment, an energization of the electric motor 9, also with the electric motor 26 blocked, causes however a linear movement of the gripping head 3. In fact, in this condition, the rotation of the structure 6 around the axis of rotation 7 leads the conical gear 22 to a "rolling" on the conical gear 23, whereby it determines a corresponding rotation of the screw 19 and a linear movement of the gripping head. Therefore, in the case of the shown embodiment, the control electronic means (31) of the engine 26 (diagrammatically shown in figure 3) are arranged for controlling the engine 26 in a negative feedback, for the purpose of compensating the displacement of the gripping head 3 induced by the relative motion between the two gears of the conical pair 22, 23 caused by the rotation of the rotatable structure 6 around the axis 7. The engine 26 is then working also during the transfer angular movement driven by the engine 9.

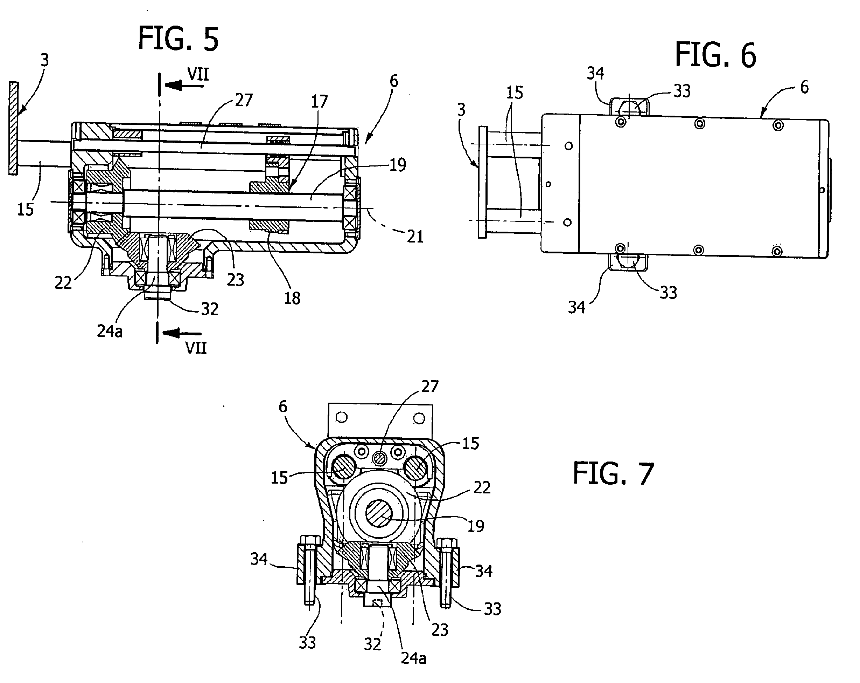

Still with reference to figures 5-7, in the example of embodiment shown therein, the assembly formed by the structure 6 and the elements contained therein, together with the gripping head 3, can be easily uncoupled from the remaining part of the device. For this purpose, the conical gear 23 is drive fitted on a portion of the shaft 24a which can be connected to the remaining part of the shaft 24 through a socket joint 32. Moreover, the hollow shaft 12 is stiffly connected to the body of the structure 6 by means of screws 33 passing through side flanges 34 (figure 7) of the body of the structure 6 and an end flange of the hollow shaft 12.

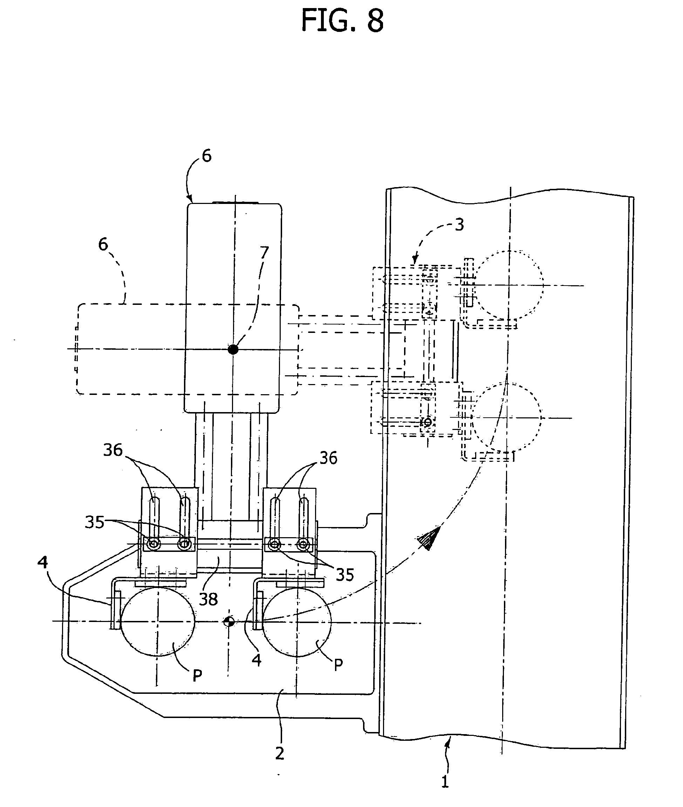

Still with reference to figures 3 and 8, the gripping head 3 includes fingers 4 which are manually adjustable in place both in the longitudinal movement direction of the head 3, and in a cross horizontal direction with respect to said longitudinal direction. For this purpose, each finger 4 is carried by a frame 4a which is fixed through screws 35 on a projection comprised by a draw piece 38 transversely directed to the above-mentioned longitudinal direction and in turn fixed to a frame 39 secured to the stems 15. The screws 35 engage longitudinal slots 36 of the draw piece 38 and are screwed inside nuts 37 which can be positioned, as one wishes, inside a longitudinal cavity of the draw piece for allowing the longitudinal and transversal adjustment.

From the above description, it is evident that the system according the invention is able to control with simple means, in an accurate and repeatable way, both the angular movement of the structure 6 around the vertical axis 7, and the linear movement of the gripping head 3 for the engagement and the release with respect to the P articles. The electric motor 26 which controls such linear movement is not mounted on the rotatable structure 6, but is arranged in a stationary position on the fixed support structure 8, with the benefits above disclosed.

Obviously, further without prejudice to the principle of the invention, construction details and embodiments could widely vary with respect to what has been described and shown by mere way of example, without leaving the ambit of the present invention.

For example, the mechanical transmission which transforms the rotation of the output shaft of the electric motor 26 in a linear movement from the gripping head 3 could also be different from the transmission with the conical pair which has been above described. It could also be used, for instance, a transmission including a pinion and a rack or any other type of suitable transmission.

## Claims

1. System for hollow glassware forming I.S. machine, including a plurality of pusher devices, each capable of transferring one or more articles (P) from a first position, on a side of a moving conveyor (1) to a second position on said conveyor (1), by means of an angular movement driven by a first electric motor (9),
wherein each of said pusher devices includes:
a first fixed structure (8),
a second structure (6) rotatably mounted upon said first fixed structure (8) and which can be rotatably driven by said first electric motor (9) for carrying out said transfer angular movement of the articles, and
a reciprocating gripping head (3) movably mounted upon said second rotatable structure (6) and driven by a second electric motor (26) through a respective mechanical transmission which transforms the rotation from the engine (26) in a linear movement of the gripping head (3), in order to obtain the in and out engagement of said gripping head (3) with respect to the articles (P) to be transferred at the beginning and at the end of the transfer angular movement,
**characterized in that** said second electric motor (26) is fixedly mounted on the above-mentioned first fixed structure (8).

2. Pusher system according to claim 1, **characterized in that** said mechanical transmission associated with the second electric motor (26) includes a first shaft (24) rotatably driven by said second electric motor (26) and arranged with its axis coincidental to the axis of rotation (7) of said rotatable structure (6).

3. Pusher system according to claim 2, **characterized in that** said mechanical transmission further includes a pair of gears (22, 23) in engagement with each other and respectively mounted on said first shaft (24) and on a second shaft (16) orthogonal to the first shaft (24), and **in that** said second shaft (19) drives the linear movement of the gripping head (3) through a screw-internal thread device (19, 18).

4. Pusher system according to claim 3, **characterized in that** the two above-mentioned gears (22, 23) in engagement with each other are two conical gears.

5. Pusher system according to claim 3, **characterized in that** the gear (23) mounted on said first shaft (24) is connected thereto through a joint (32).

6. Pusher system according to claim 5, **characterized in that** the angular movement of the above-mentioned rotatable structure 6 is driven by the above-mentioned first electric shaft (9) through a mechanical transmission including a hollow shaft (12) coaxial with said shaft (24) driven by the second electric motor (26) .

7. Pusher system according to claim 6, **characterized in that** said hollow shaft (12) is stiffly connected to the above-mentioned rotatable structure (6) in a detachable way.

8. Pusher system according to claim 7, **characterized in that** said hollow shaft (12) is connected to the rotatable structure (6) through screws (33).

9. Pusher system according to claim 4, **characterized in that** said second electric motor (26) is controlled by electronic control means (31) also during the transfer angular movement driven by the first electric motor (9), so as to compensate the displacement of the gripping head (3) induced by the relative motion between the two gears of the conical pair (22, 23) caused by the rotation of the rotatable structure (6).

10. Pusher system according to any one of the preceding claims, **characterized in that** said gripping head (3) includes gripping fingers (4) adjustable in place both in the longitudinal movement direction and in a cross horizontal direction with respect to said longitudinal direction.

11. Pusher system according to claim 1, **characterized in that** for the control of the movements driven by the two electric motors (19, 26) independent position sensors (29, 30) are provided.
